# EUROPÄISCHE PATENTSCHRIFT

(11) **EP 0 951 414 B1**
(45) Veröffentlichungstag und Bekanntmachung des Hinweises auf die Patenterteilung: **03.03.2004**
(21) Anmeldenummer: 98958232.5
(22) Anmeldetag: 23.10.1998
(51) Int. Cl.: B61D 17/04, B61D 17/08, B62D 31/02

(54) **WANDMODUL UND VERFAHREN ZUR HERSTELLUNG DESSELBEN**
WALL MODULE AND METHOD FOR PRODUCING THE SAME
MODULE PAROI ET SON PROCEDE DE FABRICATION

(30) Priorität: 08.11.1997 DE 19749519
(43) Veröffentlichungstag der Anmeldung: 27.10.1999
(73) Patentinhaber: Bombardier Transportation GmbH, 13627 Berlin (DE)
(72) Erfinder: BANHARDT, Volker, D-64625 Bensheim (DE); HOLZAPFEL, Wolfgang, D-90552 Röthenbach (DE); PROCKAT, Jan, D-12559 Berlin (DE); RISTOW, Lutz, D-80637 München (DE)
(74) Vertreter: Thielmann, Andreas
(86) Internationale Anmeldenummer: PCT/EP1998/006730
(87) Internationale Veröffentlichungsnummer: WO 1999/024302

(56) Entgegenhaltungen:
- EP-A- 0 554 539
- WO-A-95/27645

## Beschreibung

Die Erfindung betrifft ein Wandmodul gemäß dem Oberbegriff des ersten Anspruchs sowie ein Verfahren zur Herstellung des Wandmoduls.

Bei einem Wagenkasten kommen Wandmodule zur Anwendung (DE 38 38 686 A1), die aus zwei vorgefertigten äußeren Deckschichten aus Faserverbundlaminat bestehen, zwischen welche ein für sich vorgefertigtes Gittergerüst aus senkrecht zueinander stehenden, fest miteinander verbundenen Gerüststäben eingeklebt ist. Dabei sind die Hohlräume zwischen den Deckschichten und den einzelnen Gitterfeldern mit Wabenkernzuschnitten ausgefüllt, soweit die entsprechenden Gitterfelder nicht für Fenster- oder Türausschnitte vorgesehen sind. Auch die Wabenkernplatten. sind fest mit beiden Deckschichten an deren Innenseite verklebt. Die Anordnung der Gerüststäbe ist dabei entsprechend den vorgesehenen Tür- und Fensterausschnitten gewählt. Ein Aufbau dieser Art erfordert die getrennte Herstellung der fertigen Deckschichten und des Gittergerüsts sowie ihr Zusammenfügen in getrennten Produktionsschritten.

Der Erfindung liegt die Aufgabe zugrunde, ein Wandmodul gemäß dem Oberbegriff des ersten Anspruchs zu schaffen, der zumindest in Wagenkastenlängsrichtung eine hohe Steifigkeit aufweist und in einfacher Weise herstellbar ist.

Die Lösung dieser Aufgabe erfolgt gemäß der Erfindung durch die kennzeichnenden Merkmale der unabhängigen Ansprüche.

Bei einer Ausgestaltung eines Wandmoduls gemäß der Erfindung wird durch die Anwendung einer erhöhten Zahl von in Wagenkastenlängsrichtung verlaufenden Gerüststäben, die sich vorzugsweise einstückig über die gesamte Länge des Wandmoduls erstrecken und lediglich im Bereich von Tür- und Fensterausschnitten unterbrochen sind, eine hohe Längssteifigkeit erreicht. Dabei sind die quer dazu bzw. in Umfangsrichtung verlaufenden Gerüststäbe an jedem längsgerichteten Gerüststab unterbrochen, jedoch mittels eines seitlich aufgeschobenen Knotenelements gegenüber den längsgerichteten Gerüststäben räumlich definiert zugeordnet. Die Knotenelemente weisen dabei zumindest zwei winklig zueinander stehende Arme auf, die im Querschnitt dem zu übergreifenden Querschnitt der aneinander anstoßenden Gerüststäbe angepaßt sind. Die Gerüststäbe können dabei insbesondere aus Faserverbundwerkstoff bestehen, der artverwandt mit dem Werkstoff der Deckschichten ist. Dabei werden zumindest die in Wagenkastenlängsrichtung verlaufenden Gerüststäbe aus einem Werkstoff hergestellt; der einen höheren Elastizitätsmodul aufweist als die Deckschichten. Bei hoher Längsstabilität eines damit aufgebauten Wagenkastens brauchen dadurch die Deckschichten nicht für die im Betrieb oder bei Unfällen auftretenden Längskräfte bemessen zu werden. Dabei kann der Einsatz von sehr hochwertigen und damit teuren Werkstoffen auf die in Längsrichtung laufenden Gerüststäbe beschränkt werden, wobei obere bzw. untere Gerüststäbe als Obergurte bzw. Langträger dimensioniert werden können.

Bei geforderter erhöhter Steifigkeit können dabei aber auch die querlaufenden Gerüststäbe und gegebenenfalls auch die Knotenelemente aus dem Werkstoff mit dem erhöhten E-Modul gefertigt werden. Die Gerüststäbe werden als Profile, insbesondere als Hohlprofile ausgebildet. Ihre Anordnung erfolgt vorzugsweise auch dort, wo Sitze, Gepäckablagen und dergleichen Einbauten zu befestigen sind.

Die Herstellung eines in dieser Weise aufgebauten Wandmoduls erfolgt insbesondere in der Weise, daß in eine der gewünschten planen oder gewölbten Konfiguration eines Wandmoduls entsprechende Werkstückform zunächst ein trockenes Gelege aus Fasermaterial, insbesondere aus textilen Faservorformen oder Fasergelege ganzflächig eingelegt wird. Auf dieses Fasergelege werden dann die für die Längsrichtung vorgesehenen Gerüststäbe und dazwischen die einzelnen Teile der quer dazu gerichteten Gerüststäbe aufgelegt und eine gegenseitige Lagefixierung dieser Gerüststäbe an den Stoß- bzw. Kreuzungsstellen derselben mittels der lediglich aufzusteckenden Knotenelemente vorgenommen. Die Knotenelemente bestehen dabei vorzugsweise ebenfalls aus einem Faserverbundwerkstoff und können bereits beim Aufstecken mittels einer Klebemasse mit den zu fixierenden Gerüststäben statisch tragend verbunden werden. Die jeweils zwischen sich kreuzenden Gerüststäben bildenden Hohlräume werden dann mit angepaßten Hartschaumplatten oder Wabenmaterial ausgefüllt. Auf die freie Seite der Gerüststäbe und der Hartschaumplatten braucht dann lediglich ein zweites trockenes Fasergelege ganzflächig aufgelegt und die gesamte Anordnung anschließend mit einem Gießharz getränkt und ausgehärtet zu werden. Da das Gießharzgewebe die Fasergelege durchdringt, wird gleichzeitig auch eine Verklebung mit den Gerüststäben und Hartschaumplatten erreicht, wobei auch Gießharz in dazwischenliegende Freiräume eintritt. Das Tränken kann dabei insbesondere in einem Vakuum-Sack oder Vakuum-Injektionsverfahren erfolgen, so daß eine intensive und zuverlässige Tränkung und Füllung von Hohlräumen sowie eine glatte Ausbildung auch der der Werkzeugform abgewandten Deckschicht-Fläche erreicht wird.

Die Erfindung ist nachfolgend anhand der Prinzipskizzen eines Ausführungsbeispiels näher erläutert.

Es zeigen:
- Figur 1: einen Längsabschnitt des Wagenkastens eines Schienenfahrzeugs oder Omnibusses und
- Figur 2: einen vergrößerten Ausschnitt X aus der Anordnung nach Figur 1.

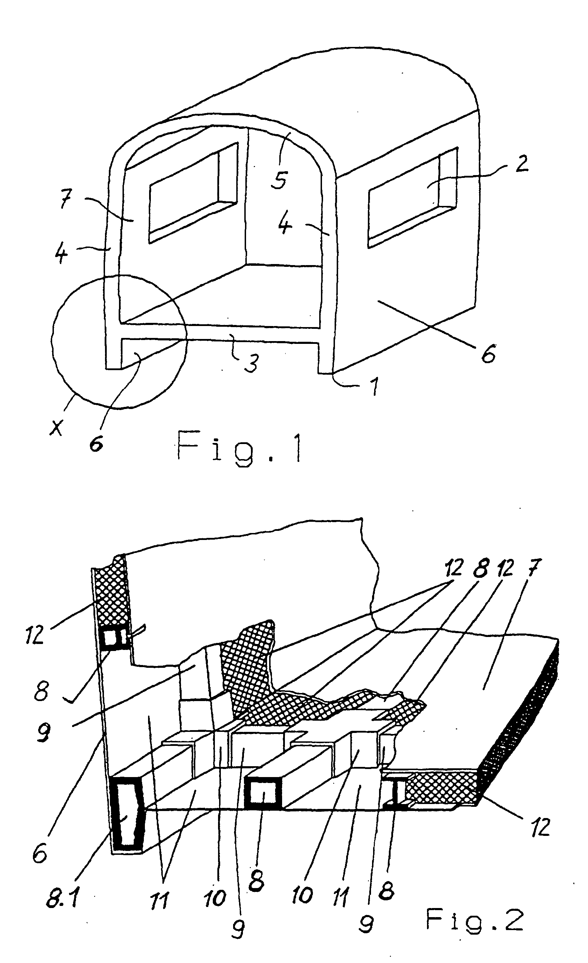

Von einem Wandmodul 1 ist in Figur 1 nur ein Längenabschnitt eines Wagenkastens dargestellt, der neben Fensteröffnungen 2 auch Türöffnungen oder dergleichen aufweisen kann. Das Wandmodul 1 bildet im fertigen Zustand einen der Außenkontur und der Innenkontur eines Wagenkastens entsprechenden einstückigen rohrförmigen Hohlkörper mit Bodenwand 3, Seitenwänden 4 und Dachwand 5. Dabei ist sowohl eine äußere Deckschicht 6 wie auch eine innere Deckschicht 7 aus gießharzgetränktem Faserwerkstoff gebildet.

Die einzelnen Wände 3, 4, 5 weisen zwischen den Deckschichten 6, 7 ein Gerüst auf, das als Tragwerk fungiert und die Deckschichten 6, 7 von im Betrieb des Fahrzeugs auftretenden Kräften zumindest weitgehend entlastet. Das Gerüst besteht dabei aus sich kreuzenden Gerüststäben 8 und 9, wobei in waagrechter Richtung und dabei parallel zur Längsrichtung des Wagenkastens verlaufende Gerüststäbe 8 sich über die gesamte Wagenkastenlänge einstückig erstrecken, soweit nicht Fensteröffnungen 2, Türöffnungen oder dergleichen eine Unterbrechung erzwingen. Senkrecht dazu stehende, in Umfangsrichtung verlaufende Gerüststäbe 9 liegen in den Wänden 3, 4, 5 außenflächenbündig stumpf an den betreffenden Seitenflanken der im Querschnitt rechteckigen, in Wagenkastenlängsrichtung verlaufenden Gerüststäbe 8 zumindest weitgehend stufenfrei an. Die in Wagenkastenlängsrichtung verlaufenden waagerechten Gerüststäbe 8 bestehen aus einem Werkstoff, der einen höheren Elastizitätsmodul aufweist, als die Deckschichten 6, 7. Diese Gerüststäbe 8 bewirken die im Betrieb und insbesondere bei Unfällen erforderliche hohe Knicksteifigkeit des Wagenkastens in Längsrichtung. Soll der Wagenkasten auch in Umfangsrichtung die hohe Knicksteifigkeit aufweisen, dann können auch die in Umfangsrichtung verlaufenden Gerüststäbe 9 aus dem gleichen Werkstoff hergestellt werden. Dabei ist es besonders zweckmäßig, diese Gerüststäbe ebenfalls aus gießharzgetränktem Faserwerkstoff herzustellen, so daß eine zuverlässige mechanische Klebeverbindung zwischen dem Gerüst 8, 9 und den Deckschichten 6, 7 möglich wird.

Zur Lagefixierung und zuverlässigen Verbindung zwischen den sich kreuzenden Gerüststäben 8, 9 sind Knotenelemente 10 vorgesehen, durch die hindurch die in Längsrichtung verlaufenden Gerüststäbe 8 ununterbrochen hindurchlaufen, während die quer dazu in Umfangsrichtung des Wagenkastens angeordneten Gerüststäbe 9 mit ihren Enden jeweils in eines der Knotenelemente eingreifen. Die einzelnen Arme der Knotenelemente 10 können dabei einen geschlossenen Querschnitt aufweisen, der dem damit zusammenzusteckenden Querschnitt der Gerüststäbe 8, 9 möglichst eng angepaßt ist. Dadurch bietet die Steckverbindung für sich bereits einen weitgehend steifen Zusammenhalt der Gerüststäbe 8, 9. Vorzugsweise werden jedoch die Gerüststäbe 9 mit den Knotenelementen 10 verklebt. Dabei kann es zweckmäßig sein, auch die Knotenelemente 10 aus Werkstoff mit erhöhtem Elastizitätsmodul zu fertigen.

Hohlräume 11 zwischen den einzelnen Gerüststäben 8, 9 und den Deckschichten 6, 7 sind bzw. werden mit einem selbsttragenden Wärmeisoliermittel 12 in Form von Hartschaumplatten, Wabenkernplatten oder dergleichen ausgefüllt und mit den umgebenden Bauelementen 6, 7, 8, 9 ebenfalls verklebt.

Der Wagenkasten kann aus einem einzigen Wandmodul hergestellt sein. Es ist jedoch auch möglich, beispielsweise die Seitenwände 4 und die Bodenwand 3 als ein Stück sowie getrennt davon die Dachwand 5 herzustellen. Das Dachmodul braucht dann lediglich noch auf das wannenartige untere Modul aufgesetzt und damit beispielsweise durch Kleben fest verbunden zu werden.

Die Herstellung eines Wandmoduls erfolgt dabei bevorzugt in der Weise, daß in eine Modulform ganzflächig ein erstes Fasergelege eingelegt wird. Auf diesem Fasergelege kann dann das Gerüst aus den sich kreuzenden Gerüststäben 8, 9 einschließlich der Knotenelemente 10 aufgebaut werden. Anschließend werden die zwischen den Gerüststäben 8, 9 liegenden Hohlräume 11 soweit erforderlich mit selbsttragendem Wärme- und/oder geräuschdämmendem Isoliermaierial 12 ausgefüllt. Danach kann bereits ein zweites Fasergelege auf die noch freie Seite des Gerüsts einschließlich der Isolierung 12 aufgelegt werden, sofern nicht bei schalenförmiger oder flächiger Ausbildung des jeweiligen Wandmoduls das erste Fasergelege in entsprechender Weise auf die noch abzudeckende Fläche umgeschlagen werden kann. Durch Tränken der Gesamtanordnung mit Gießharz und Aushärten desselben wird dann die angestrebte Verklebung zwischen den Fasergelegen den Gerüststäben und der Wärmeisolierung einschließlich der Knotenelemente herbeigeführt. Dabei ist es zweckmäßig, bereits beim Zusammensetzen des Gerüsts zwischen die Knotenelemente 10 und die Gerüststäbe 8, 9 Mebstoff bzw. Gießharz einzubringen, um eine großflächige Verklebung der Steckverbindungen zu erzielen. Vorzugsweise wird das Durchtränken der Gesamtanordnung noch dadurch verbessert, daß ein Vakuum-Sack oder Vakuum-Injektionsverfahren angewandt wird, so daß das Gießharz oder ein entsprechender Werkstoff vorhandene Hohlräume und Spalte zumindest weitgehend lufteinschlußfrei ausfüllt.

Im übrigen können bei diesem Aufbau die unteren bzw. seitlichen längslaufenden Gerüststäbe 8.1 im Eckbereich zwischen Bodenwand 3 und Seitenwänden 4 jeweils als durchgehender Langträger und am Übergang zwischen den Seitenwänden 4 und der Dachwand 5 als durchgehender Obergurt dimensioniert werden. Zudem bilden bei diesem Aufbau die getränkten Fasergelege gleichzeitig die äußere Deckschicht 6 bzw. die innere Deckschicht 7, die in der Modulform bereits mit glatten Oberflächen hergestellt werden können und daher keiner oder nur sehr geringer mechanischer Nacharbeit durch Schleifen, Spachteln oder dergleichen bedürfen.

## Patentansprüche

1. Wandmodul für Wagenkästen, insbesondere für Schienenfahrzeuge dessen Wandungen aus Deckschichten aus Faserverbundwerkstoff bestehen, zwischen welchen parallel zur Wagenkastenlängsrichtung und quer dazu verlaufende Gerüststäbe (8) sowie Füllmittel (12) vorgesehen sind, die fest mit den Deckschichten verbunden sind, wobei sich die in Wagenkastenlängsrichtung verlaufenden Gerüststäbe (8) außer im Bereich von Fenster- oder Türausschnitten (2) einstückig im Wesentlichen über die gesamte Länge des Wandmoduls (1) erstrecken und sich kreuzende Gerüststäbe (8, 9) an den Kreuzungsstellen jeweils mittels eines Knotenelements (10) fest miteinander verbunden sind, **dadurch gekennzeichnet, daß** mehr als drei parallel zur Wagenkastenlängsachse verlaufende Gerüststäbe vorgesehen sind und daß zumindest die in Wagenkastenlängsrichtung verlaufenden Gerüststäbe (8) aus einem Werkstoff bestehen, der einen höheren Elastizitätsmodul aufweist als die Deckschichten (6, 7).

2. Wandmodul nach Anspruch 1, **dadurch gekennzeichnet, daß** Gerüststäbe (8, 9) aus einem Faserverbundwerkstoff bestehen.

3. Wandmodul nach Anspruch 1 oder 2, **dadurch gekennzeichnet, daß** alle Gerüststäbe (8, 9) und/oder die Knotenelemente (10) aus einem Werkstoff bestehen, der einen höheren Elastizitätsmodul aufweist als die Deckschichten (6, 7).

4. Wandmodul nach einem der vorhergehenden Ansprüche, **dadurch gekennzeichnet, daß** in den zwischen den Gerüststäben (8, 9) eingeschlossenen Räumen (11) maßlich angepaßte Füllplatten (12) mit mechanischer Stützfunktion, Hartschaumplatten oder Wabenmaterial angeordnet sind.

5. Wandmodul nach einem der vorhergehenden Ansprüche, **dadurch gekennzeichnet, daß** die Gerüststäbe (8, 9) Profile mit den Lastfällen angepaßten Querschnitten aufweisen.

6. Wandmodul nach einem der vorhergehenden Ansprüche, **dadurch gekennzeichnet, daß** sich Gerüststäbe (8, 8.1) über die gesamte freie Länge des Wandmoduls erstrecken.

7. Verfahren zur Herstellung von Wandmodulen nach einem der vorhergehenden Ansprüche, **dadurch gekennzeichnet, daß** in eine Modulform ganzflächig ein erstes Fasergelege eingelegt wird, daß auf das erste Fasergelege Gerüststäbe (8, 9) in sich kreuzender Anordnung aufgelegt werden, daß auf die Kreuzungsstellen von Gerüststäben (8, 9) Knotenverbinder (10) aufgebracht werden, daß in den zwischen sich kreuzenden Gerüststäben (8, 9) gebildeten Hohlraum angepaßte Füllplatten (12), Hartschaumplatten oder Platten aus Wabenmaterial eingelegt werden, daß auf die Gerüststäbe mit den eingefügten Füllplatten, Hartschaumplatten oder Platten aus Wabenmaterial ein zweites Fasergelege ganzflächig aufgelegt wird, daß anschließend die Fasergelege und dazwischenliegende Freiräume mit einem Gießharz getränkt werden und daß danach das Gießharz ausgehärtet wird, wobei zumindest die in Wagenkastenlängsrichtung verlaufenden Gerüststäbe (8) aus einem Werkstoff bestehen, der einen höheren, Elastizitätsmodul aufweist als die aus dem ersten und zweiten Fasergelege gebildeten Deckschichten (6, 7).

8. Verfahren nach Anspruch 7, **dadurch gekennzeichnet, daß** die Verbindungsbereiche zwischen den Knotenelementen (10) und den Gerüststäben (8, 9) bereits beim Zusammensetzen mit Kleber benetzt werden.

9. Verfahren nach Anspruch 7 oder 8, **dadurch gekennzeichnet, daß** das Tränken in einem Vakuum-Sack oder Vakuum-Injektionsverfahren ausgeführt wird.

## Claims

1. A wall module for car bodies, in particular for railway vehicles, whose walls are made of cover layers composed of a fibre composite material between which are provided scaffolding poles (8) oriented parallely and transversely to the longitudinal direction of the car body and filling means (12) fixedly connected to said cover layers, wherein said scaffolding poles (8) being oriented along the longitudinal direction of the car body extend in one piece over substantially the entire length of the wall module (1) except in the region of the door and window cutouts (2) and wherein crossing scaffolding poles (8, 9) are respectively fixedly connected at the intersection points by means of a node element (10), **characterized in that** more than three scaffolding poles oriented parallely to the longitudinal axis of the car body are provided and that at least those scaffolding poles (8) that are oriented along the longitudinal direction of the car body are made of a material that comprises a higher modulus of elasticity than the cover layers (6, 7).

2. The wall module according to claim 1, **characterized in that** the scaffolding poles (8, 9) are made of a fibre composite material.

3. The wall module according to claim 1 or 2, **characterized in that**, all of the scaffolding poles (8, 9) and/or the node elements (10) are made of a material that comprises a higher modulus of elasticity than the cover layers (6, 7).

4. The wall module according to any one of the preceding claims, **characterized in that** size adapted filling panels (12) provided with a mechanical support function, hard foam panels or honeycomb material are disposed within the spaces (11) defined between the scaffolding poles (8, 9).

5. The wall module according to any one of the preceding claims, **characterized in that** the scaffolding poles (8, 9) comprise profiles having cross sections that are adapted to the type of load.

6. The wall module according to any one of the preceding claims, **characterized in that** the scaffolding poles (8, 8.1) extend over the entire free length of the wall module.

7. A method of manufacturing wall modules according to any one of the preceding claims, **characterized in that** a first layer of fibres is placed into a module mould so as to cover its entire surface, that scaffolding poles (8, 9) are placed crosswise onto said first layer of fibres, that node connectors (10) are mounted to the points of intersection of scaffolding poles (8, 9), that adapted filling panels (12), hard foam panels or panels made of honeycomb material are placed into the cavity formed between the crossing scaffolding poles (8, 9), that a second layer of fibres is placed onto the entire surface of the scaffolding poles with the filling panels, hard foam panels or panels made of honeycomb material inserted therein, that the fibre layers and the spaces in between are then soaked with a casting resin and that the casting resin is thereafter hardened, wherein at least those scaffolding poles (8) being oriented along the longitudinal direction of the car body are made of a material that comprises a higher modulus of elasticity than the cover layers (6, 7) formed from the first and second fibre layers.

8. The method according to claim 7, **characterized in that** the connecting regions between the node elements (10) and the scaffolding poles (8, 9) are wetted with adhesive during assembling already.

9. The method according to claim 7 or 8, **characterized in that** soaking is performed in a vacuum bag or vacuum injection process.

## Revendications

1. Module paroi pour caisses de véhicule, notamment pour véhicules ferroviaires, dont les parois sont constituées de couches de recouvrement en matériau composite renforcé par des fibres entre lesquelles sont prévus des barres d'échafaudage (8) orientées parallèlement et transversalement à la direction longitudinale de la caisse de véhicule ainsi que des matériaux de remplissage (12) solidarisés aux couches de recouvrement, les barres d'échafaudage (8) orientées dans la direction longitudinale de la caisse de véhicule s'étendant d'une seule pièce sur sensiblement toute la longueur du module paroi (1) sauf dans la zone occupée par les baies de portes et de fenêtres (2) et les barres d'échafaudages entrecroisées (8, 9) étant respectivement solidarisées les unes aux autres aux points d'intersection par l'intermédiaire d'un élément nodal (10),
**caractérisé en ce que**
sont prévues plus de trois barres d'échafaudage parallèles à l'axe longitudinal de la caisse de véhicule et que du moins les barres d'échafaudage (8) orientées dans la direction longitudinale de la caisse de véhicule sont constituées d'un matériau comportant un module d'élasticité plus élevé que les couches de recouvrement (6, 7).

2. Module paroi selon la revendication 1, **caractérisé en ce que** les barres d'échafaudage (8, 9) sont constituées d'un matériau composite renforcé par des fibres.

3. Module paroi selon la revendication 1 ou 2, **caractérisé en ce que** toutes les barres d'échafaudage (8, 9) et/ou les éléments nodaux (10) sont constitués d'un matériau comportant un module d'élasticité plus élevé que les couches de recouvrement (6, 7).

4. Module paroi selon l'une quelconque des revendications précédentes, **caractérisé en ce que** des panneaux de remplissage (12) de dimensions adaptées assurant une fonction de support mécanique, des plaques de mousse rigide ou un matériau nid d'abeilles est disposé dans les espaces (11) compris entre les barres d'échafaudage (8, 9).

5. Module paroi selon l'une quelconque des revendications précédentes, **caractérisé en ce que** les barres d'échafaudage (8, 9) comportent des profilés qui, en section transversale, sont adaptés aux cas de chargement.

6. Module paroi selon l'une quelconque des revendications précédentes, **caractérisé en ce que** des barres d'échafaudage (8, 8.1) s'étendent sur toute la longueur libre du module paroi.

7. Procédé de fabrication de modules paroi selon l'une quelconque des revendications précédentes, **caractérisé en ce qu'**une première couche de fibres est disposée sur toute la surface d'un moule à module, que des barres d'échafaudage (8, 9) sont disposées en croix sur la première couche de fibres, que des raccords nodaux (10) sont disposés sur les points d'intersection de barres d'échafaudage (8, 9), que sont posés dans la cavité formée par les barres d'échafaudage (8, 9) entrecroisées des panneaux de remplissage (12) adaptés, des plaques de mousse rigide ou des plaques en matériau nid d'abeilles, qu'une deuxième couche de fibres est disposée sur toute la surface des barres d'échafaudage comprenant les panneaux de remplissage, les plaques de mousse rigide ou les plaques en matériau nid d'abeilles insérés, que les couches de fibres et les espaces libres intermédiaires sont alors imprégnés de résine coulée et que la résine coulée est ensuite durcie, les barres d'échafaudage (8) orientées dans la direction longitudinale de la caisse de véhicule au moins étant constituées d'un matériau qui comporte un module d'élasticité plus élevé que les couches de recouvrement (6, 7) formées par la première et la seconde couche de fibres.

8. Procédé selon la revendication 7, **caractérisé en ce que** les zones de liaison entre les éléments nodaux (10) et les barres d'échafaudage (8, 9) sont enduites de colle dès l'assemblage.

9. Procédé selon la revendication 7 ou 8, **caractérisé en ce que** l'imprégnation est effectuée dans un sac sous vide ou selon un procédé d'injection sous vide.
